Europäisches Patentamt

European Patent Office

Office européen des brevets

(11) Veröffentlichungsnummer: **0 219 011 B1**

# (12) EUROPÄISCHE PATENTSCHRIFT

(45) Veröffentlichungstag der Patentschrift: **08.01.92**

(51) Int. Cl.⁵: **B42D  15/02**

(21) Anmeldenummer: **86113690.1**

(22) Anmeldetag: **03.10.86**

(54) **Ausweiskarte mit visuell sichtbarem Echtheitsmerkmal und Verfahren zur Herstellung derselben.**

(30) Priorität: **15.10.85 DE 3536740**

(43) Veröffentlichungstag der Anmeldung:
**22.04.87 Patentblatt  87/17**

(45) Bekanntmachung des Hinweises auf die
Patenterteilung:
**08.01.92 Patentblatt  92/02**

(84) Benannte Vertragsstaaten:
**AT BE CH DE ES FR GB IT LI LU NL SE**

(56) Entgegenhaltungen:
**DE-A- 2 532 935**
**DE-B- 2 907 004**
**DE-C- 3 151 407**
**GB-A- 2 132 136**

(73) Patentinhaber: **GAO Gesellschaft für Automation und Organisation mbH
Euckenstrasse 12
W-8000 München 70(DE)**

(72) Erfinder: **Lass, Joseph, Dipl.-Phys. Dr.
Hiltenspergerstrasse 29
W-8000 München 40(DE)**
Erfinder: **Merkle, Hansjürgen, Chem-.Ing.
Bodenseestrasse 308
W-8000 München 60(DE)**
Erfinder: **Becker, Wolfgang, Dipl.-Phys.
Karl-Huber-Strasse 17
W-8014 Neubiberg(DE)**
Erfinder: **Herget, Werner, Dipl.-Ing.
Gänselieslstrasse 55
W-8000 München 83(DE)**
Erfinder: **Lob, Erwin, Dipl.-Ing.
Heiterwangerstrasse 4
W-8000 München 70(DE)**

(74) Vertreter: **Klunker . Schmitt-Nilson . Hirsch
Winzererstrasse 106
W-8000 München 40(DE)**

**Beschreibung**

Die Erfindung betrifft eine Ausweiskarte, die mehrere Kunststoffschichten enthält, in die mittels eines Laserstrahls Informationen eingebracht sind, die in Form von Änderungen der optischen Eigenschaften des Kunststoffmaterials aufgrund irreversibler, durch Laserstrahl bewirkter Materialänderungen sichtbar sind.

Ausweiskarten in Form von Kreditkarten, Bankkarten, Barzahlungskarten und dergleichen werden auf den verschiedensten Dienstleistungssektoren, beispielsweise im bargeldlosen Zahlungsverkehr sowie im innerbetrieblichen Bereich in zunehmendem Maß eingesetzt. Infolge ihrer großen Verbreitung stellen sie einerseits typische Massenartikel dar; ihre Herstellung, d. h. die Fertigung des Kartenaufbaus und die Einbringung der kartenindividuellen Benutzerdaten, muß einfach und kostengünstig sein. Andererseits müssen die Karten so ausgebildet sein, daß sie in größtmöglichem Maß gegen Fälschung und Verfälschung geschützt sind. Die vielen bereits auf dem Markt und sich noch im Entwicklungsstadium befindlichen Arten von Ausweiskarten zeigen das Bemühen der einschlägigen Industrie, die beiden genannten gegenläufigen Bedingungen zu optimieren.

Aus der DE-PS 29 07 004 ist eine Ausweiskarte bekannt, bei der die obengenannten Bedingungen erfüllt sind. Das Verfahren zur Herstellung dieser bekannten Karte ist dadurch gekennzeichnet, daß die personenbezogenen Daten mittels eines Laserstrahls in die bereits fertiggestellte, kaschierte Karte eingeschrieben werden. Die Karte besteht aus einem opaken Karteninlett, das zwischen transparenten Deckschichten eingeschlossen ist. Der Beschriftungsvorgang erfolgt durch die transparente Deckfolie hindurch. Damit kann einerseits die Herstellung wesentlich vereinfacht werden, da unter anderem nach der Personalisierung keine weiteren Fertigungsschritte mehr erforderlich sind und andererseits die Fälschungs- und Verfälschungssicherheit erhöht werden, da z. B. die Daten aufgrund der durch den Laserstrahl bewirkten Materialzerstörung in einer nicht mehr veränderbaren Form vorliegen. Bei geeigneter Wahl der Intensität des Laserstrahls kann gleichzeitig mit der Beschriftung des Inlets eine dazu kongruente Kennzeichnung der Deckfolie erreicht werden. Die personellen Daten liegen kann in verschiedenen Kartenschichten kongruent vor. Diese Kennzeichnung, z. B. in Form einer Reliefstruktur an der Oberfläche, ist in einfacher Weise manuell prüfbar. Sie stellt damit ebenfalls ein Echtheitsmerkmal dar und erschwert somit in hohem Maße jede Manipulation bzw. den Versuch, eine derartige Karte durch eine Eindrucksfälschung nachzuahmen.

Es wurde auch schon vorgeschlagen (DE-PS 31 51 407), als Aufzeichnungsmedium in der Karte eine Kunststoffschicht vorzusehen, die bei visueller Betrachtung völlig transparent erscheint, das Licht des Laserstrahls jedoch so stark absorbiert, daß unter Einwirkung des Laserstrahls in der Folie eine Schwärzung erfolgt. Damit können in an sich transparente Schichten, Bilder oder Daten mit einer hohen Auflösung und einer sehr guten Schriftqualität eingebracht werden.

Trotz dieser hohen Fälschungssicherheit und der relativ einfachen Prüfbarkeit ist man weiterhin bestrebt, die Gestaltungsmöglichkeiten der Karte bezüglich des visuellen Eindrucks zu erweitern und Verfälschungen und Totalfälschungen von Karten durch die Einführung zusätzlicher Echtheitsmerkmale, die nur mit hohem technischen Aufwand nachbildbar sind, weiter zu erschweren.

So wurde z. B. vorgeschlagen, zur Erhöhung der Fälschungssicherheit von Kunststoffkarten auf mehrere transparente Einzelschichten sich überlappende Druckbilder aufzubringen, so daß bei Betrachtung der Karte ein räumlicher Eindruck durch die unterschiedliche Lage der Druckbilder im Kartenaufbau erzielt wird (DE-OS 24 32 935). Die Druckbilder werden auf transparente Folien aufgedruckt und die einzelnen Schichten dann anschließend durch Anwendung von Wärme und Druck miteinander verbunden. Die Druckbilder können aus einer Vielzahl von Linien bestehen, so daß durch die Überlagerung der Druckbilder ein Moire sichtbar ist, das sich abhängig vom Betrachtungswinkel verändert.

Die Herstellung einer derartigen Ausweiskarte ist aufwendig, da die Druckbilder in mehreren Druckvorgängen auf verschiedene Kartenschichten aufzubringen sind und genau plaziert sein müssen. Anschließend müssen die Kartenschichten so zusammengefügt werden, daß die Druckbilder passergenau übereinanderliegen. Bei der Laminierung der Karte erweichen die Schichten, wobei eine Verschiebung der Druckbilder bzw. eine lokale Verzerrung des Druckbildes verursacht werden kann. Es ergeben sich dadurch hohe Ausschußraten, die für eine wirtschaftliche Herstellung eines Massenartikels, wie es eine Ausweiskarte darstellt, nicht mehr vertretbar ist.

Die Aufgabe der Erfindung besteht nun darin, unter Beibehaltung der technologischen und sicherheitstechnischen Vorteile des Laserbeschriftungsverfahrens die Gestaltungsmöglichkeiten für Ausweiskarten bezüglich des visuellen Eindrucks zu erweitern, wobei die Echtheit der Karte in einfacher Weise visuell prüfbar sein soll.

Diese Aufgabe wird durch die im Kennzeichen des Hauptanspruchs angegebenen Merkmale gelöst. Verfahren zur Herstellung dieser Ausweiskarte sind Gegenstand von Nebenansprüchen.

Die Erfindung baut darauf auf, daß es durch geeignete Wahl des Kartenschichtmaterials und der Laser- bzw. Aufzeichnungsparameter möglich ist, Informationen mittels eines Laserstrahls gleichzeitig in mehrere Schichten oder gezielt nur in einzelne Schichten einzubringen, wobei diese Informationen auch durch einen transparenten Zwischenbereich voneinander getrennt vorliegen können.

Die Informationen werden z. B. unter senkrechtem Einstrahlwinkel in die Karte eingebracht. Bei anschließender Betrachtung unter diesem Winkel überdecken sich die Informationen in den einzelnen Schichten. Wird die Karte aber leicht gekippt, so sind die in die verschiedenen Ebenen der Karte eingebrachten Informationen einzeln und gegebenenfalls auch getrennt voneinander sichtbar.

Je nach Wahl der obengenannten Parameter erscheint dabei die Information in einer verbreiterten Form oder die in den einzelnen Schichten vorliegenden Informationen sind räumlich voneinander getrennt sichtbar, so daß sich z. B. eine Doppellinienschrift zeigt.

Es ist aus der DE-OS 34 25 263 bekannt, in einen transparenten Aufzeichnungsträger mittels eines Laserstrahls Informationen in verschiedene Schichttiefen einzubringen, wobei die Aufzeichnung in den verschiedenen Tiefen durch die Steuerung der Fokuslage des Lasers bestimmt wird.

Dieses Verfahren hat aber erhebliche Nachteile und ist für die Herstellung von Ausweiskarten, deren Normdicke 0,76 mm beträgt, wenn überhaupt, nur mit einem hohen technischen Aufwand realisierbar. Eine definierte Steuerung der Fokuslage des Lasers innerhalb eines derart eng begrenzten Bereiches ist technisch nur schwer nachvollziehbar. Der Aufzeichnungsträger muß weiterhin die Bedingung erfüllen, daß er vollkommen plan ist, da sich sonst bei der Aufzeichnung die Lage des Aufzeichnungspunktes in der Karte bezüglich seiner Tiefe verschiebt. Außerdem ist eine gleichzeitige Beschriftung in z. B. zwei verschiedene Lagen nicht möglich, da es hier einer Zwischenregelung der Fokuslage des Lasers bedarf.

Das erfindungsgemäße Verfahren löst diese Probleme durch die gezielte Auswahl der Kartenschichten und des Kartenaufbaus, wobei es dann durch einfache Regelung der Aufzeichnungsparameter, wie z. B. Bestrahlungsstärke bzw. der Intensität möglich ist, gleichzeitig in zwei oder mehr verschiedenen Ebenen der Karte eine sich exakt überdeckende Beschriftung einzubringen.

Kunststoffe wie auch andere Materialien haben meist die Eigenschaft, daß eine Materialänderung, wie z. B. eine Schwärzung, etc., durch Einwirkung eines Laserstrahls erst nach Überschreiten einer bestimmten Intensität erfolgt. Der erforderliche Intensitätswert, ab dem das Material empfindlich wird, wird unter anderem von der Zusammensetzung des Materials bestimmt. Aus der DE-PS 31 51 407 ist z. B. eine PVC-Folie bekannt, bei der bereits relativ geringe Intensitäten ausreichen, um eine Schwärzung hervorzurufen. Andere Materialien sind z. B. aus der DE-OS 28 17 357 bekannt, bei denen die erforderlichen Intensitätswerte durch Beimischung des von z. B. exotherm reagierenden Substanzen erniedrigt wurden. Unter "erforderlicher Intensitätswert" wird im folgenden Text diejenige Intensität der Laserstrahlung verstanden, bei welcher in der betreffenden Schicht erstmals Veränderungen wie Schwärzungen, etc. auftreten. Der Intensitätswert wird somit als eine Eigenschaft der Schicht bzw. des Schichtmaterials im Sinne einer Empfindlichkeit definiert.

Durch das erfindungsgemäße Verfahren können nun unter Zuhilfenahme der obengenannten Gegebenheiten in eine fertige Ausweiskarte visuell prüfbare Merkmale eingebracht werden, die unter verschiedenen Betrachtungswinkeln einen unterschiedlichen visuellen und gegebenenfalls auch räumlichen Eindruck vermitteln. Dieses Merkmal wird im folgenden Parallaxenbild genannt.

In einer beispielhaften Ausführungsform der Erfindung wird für die Karte ein Zweischichtaufbau gewählt, wobei die Schichten aus einem transparenten Kunststoffmaterial bestehen und ein gegenüber dem Laserstrahl unterschiedliches Absorptionsverhalten aufweisen. Die dem Laser zugewandte Schicht ist z. B. eine PVC-Folie, die bis zu bestimmten Bestrahlungsstärken unverändert bleibt und erst bei relativ hohen Bestrahlungsstärken eine visuell erkennbare Veränderung zeigt. Für die vom Laser aus betrachtet unter dieser Schicht liegende Schicht wird hingegen ein Kunststoffmaterial gewählt, das schon bei relativ geringen Intensitäten eine Veränderung zeigt.

Werden in die so aufgebaute Karte Informationen mit einer geringen Intensität eingebracht, so tritt nur in der empfindlicheren Schicht eine visuell sichtbare Veränderung , z. B. eine Schwärzung, auf. Bei erhöhten Intensitäten tritt neben der Schwärzung in dieser Schicht auch eine Schwärzung in der weniger empfindlichen Schicht auf, die sich durch geeignete Wahl der Aufzeichnungsparameter auf die Oberflächennähe dieser Schicht begrenzen läßt. Damit liegt in zwei unterschiedlichen Schichttiefen eine kongruente Information vor. Zwischen diesen beiden Informationsebenen kann sich ein transparenter, vom Laserstrahl unbeeinflußter Zwischenraum ausbilden, so daß diese Informationsebenen auch räumlich voneinander getrennt sind.

Diese Art der Einbringung von Informationen mittels eines Laserstrahls erlaubt nun eine Vielzahl von unterschiedlichen Gestaltungsmöglichkeiten der Karte, die der Karte ein charakteristisches Aussehen geben. Ein in zwei verschiedene Ebenen kongruent eingebrachtes linienförmiges Zeichen erscheint z. B. bei seitlicher Betrachtung in verbreiterter Form oder gar in Doppelschrift. So eingebrachte Zeichen verändern also ihr Erscheinungsbild in Abhängigkeit vom Betrachtungswinkel, wobei durch die sichtbar in die Tiefe gehende Schrift der Eindruck eines räumlichen Bildes noch verstärkt wird. Die Gesamtdicke der beiden Schichten wird dabei vorzugsweise so gewählt, daß die Schriftbreite, mit der die Informationen aufgezeichnet werden, nur etwa halb so groß ist wie die Gesamtdicke der Schichten, die in etwa der Tiefe entspricht, über die sich die Informationen in der Karte erstrecken. Je kleiner das Verhältnis Schriftbreite zu Gesamtdicke der Folien ist, desto prägnanter wird die Änderung des Erscheinungsbildes der Informationen mit Variation des Betrachtungswinkels.

In einer weiteren beispielhaften Ausführungsform der Erfindung wird ebenfalls der schon oben beschriebene Kartenaufbau gewählt. In diese Karte wird ein Linienraster eingebracht, wobei bei der Einbringung des Linienrasters die Intensität selektiv geändert wird. Durch die Änderung der Intensität wird das Linienraster in der dem Laser zugewandten Schicht mit höheren erforderlichen Intensitätswerten unterbrochen und die so gebildeten Aussparungen können z. B. die Form eines Zeichens, Musters oder Logos haben. Die empfindlichere Folie weist dagegen das vollständige Linienraster auf. Bei senkrechter Betrachtung ist damit nur das Linienraster an sich erkennbar. Bei seitlicher Betrachtung hingegen verschieben sich für den Betrachter diese beiden Linienraster gegeneinander, so daß die Aussparungen in der oberen Schicht sichtbar werden und damit ein so eingebrachtes Zeichen für den Betrachter klar erkennbar ist. Die Linien des Rasters können dabei so eng gesetzt werden, daß sich bei seitlicher Betrachtung die Rasterlinien in der oberen und in der unteren Schichtebene zu einer vollflächigen schwarzen Fläche ergänzen. In den Bereichen, in denen das Linienraster in einer Schicht unterbrochen ist, sind dann die durch die Aussparungen gebildeten Zeichen als helle Bereiche in dunkler Umgebung sichtbar. Anstelle eines geradlinigen Linienmusters können diese Linien auch wellenförmig ausgebildet sein. Bei einem derartigen Linienmuster sieht der Betrachter die Linien der einzelnen Linienraster in lokal variierenden Abständen, so daß dabei ein Moiré entsteht, das sich abhängig vom Betrachtungswinkel verändert.

Das Parallaxenbild kann durch entsprechende Laserstrahlsteuerung von Karte zu Karte einen unterschiedlichen Informationsgehalt aufweisen, wobei der Wechsel des Informationsgehalts bei Verwendung eines rechnergesteuerten Lasers praktisch ohne Mehraufwand erreichbar ist. Durch die Einbringung individueller Kartendaten in dieses Parallaxenbild ist dieses als Echtheitsmerkmal kartenspezifisch, d. h. es ist an eine bestimmte Karte gebunden und kann daher nicht auf andere Karten übertragen werden. Diese Individualisierung trägt daher in erheblichem Maße zur Verbesserung der Fälschungssicherheit der Karte bei. Das Parallaxenbild wird vorzugsweise in dem Augenblick aufgezeichnet, in dem auch die übliche Personalisierung durchgeführt wird, so daß alle Daten sicher und richtig zusammengefügt werden. Es kann damit auf einfache Weise ausgeschlossen werden, daß fälschlicherweise die kartenindividuellen Daten des Parallaxenbilds mit den Personalisierungsdaten einer anderen Karte der Fertigungsserie zusammengefügt werden.

Dies sind nur Beispiele der Vielzahl der Gestaltungsmöglichkeiten, die sich durch das erfindungsgemäße Verfahren ergeben. Weitere Vorteile und vorteilhafte Ausführungsformen der Erfindung sind Gegenstand der nachfolgenden Beschreibung anhand der Figuren.

Die Figuren zeigen:

| | |
|---|---|
| Fig. 1 | eine erfindungsgemäße Ausweiskarte in der Aufsicht, |
| Fig. 2 | eine Schnittansicht, |
| Fig. 3a, b | Ansichten des Parallaxenbildes aus verschiedenen Betrachtungswinkeln |
| Fig. 4 | eine weitere Gestaltungsmöglichkeit der erfindungsgemäßen Karte, |
| Fig. 5 | Darstellungen der verschiedenen Erscheinungsformen dazu, |
| Fig. 6 - 8 | verschiedene Schichtaufbauten der Karte, |
| Fig. 9 | eine weitere Gestaltungsmöglichkeit der erfindungsgemäßen Karte, |
| Fig. 10 | eine Ausführungsform der in Fig. 6 gezeigten Karte in vergrößerter Darstellung. |

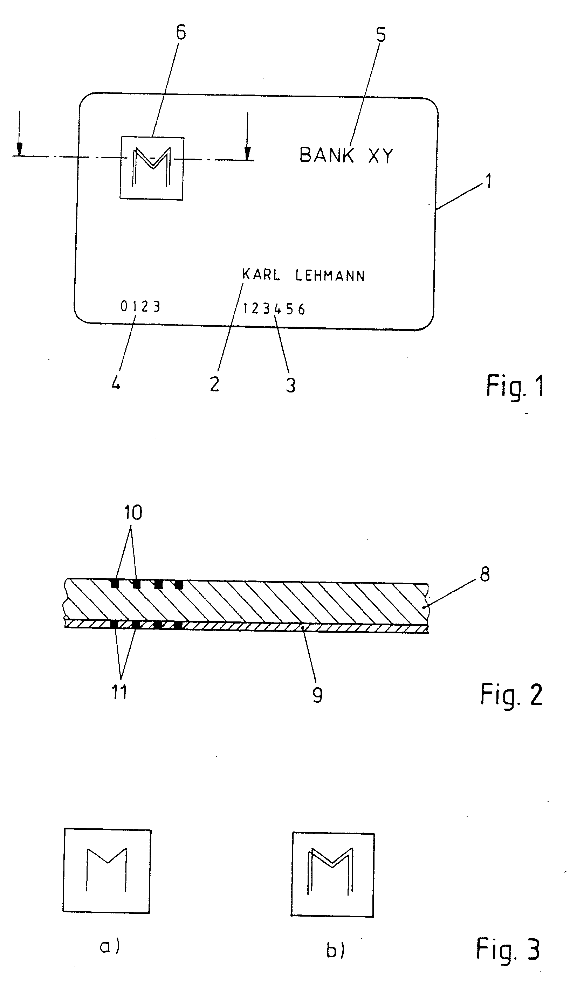

Die Fig. 1 zeigt eine Ausweiskarte 1 in der Aufsicht, die mit den üblichen Daten versehen ist. Die kartenindividuellen Daten, wie der Name des Benutzers 2, Kontonummer 3 und Kartennummer 4 werden vorzugsweise mittels eines Laserstrahls in eine innere Kartenschicht eingebracht, während die benutzerunabhängigen Daten, wie die Institutsangabe, im allgemeinen mit drucktechnischen Mitteln auf eine der Kartenschichten aufgebracht werden. In einem Teilbereich 6 der Karte ist in einer beispielhaften Ausführungsform das erfindungsgemäße Parallaxenbild vorgesehen.

Die Fig. 2 zeigt eine Schnittansicht durch die Karte gemäß Fig. 1, aus der die Lage der Informationen in den verschiedenen Kartenebenen sichtbar wird. Die hier gezeigte Karte besteht aus zwei Schichten 8 und 9, die zumindest im Bereich 6 transparent sind. Die Schicht 8 besteht aus einer Kunststoffolie, die erst bei entsprechend hohen Bestrahlungsstärken eine Schwärzung zeigt, die wie später noch erläutert, auf den Oberflächenbereich begrenzt werden kann. Die Schwärzung ist in der Regel mit einer gleichzeitigen Ausbildung eines Mikroreliefs verbunden. Für die letztgenannte Schicht wird z. B. eine Kunststoffolie verwendet, die unter der Handelsbezeichnung Stauffen 44.4 erhältlich ist und in der nach der Bestrahlung mit einem gepulsten Nd-Yag-Laser mit einem Intensitätswert von $3 \times 10^8$ W/cm$^2$ im Fokus eine visuell sichtbare Veränderung in Form von Schwärzungen und Bläschen entsteht. Die zweite Schicht 9 ist eine Kunststoffolie, die bereits bei geringen Intensitäten geschwärzt wird. Damit ist eine Beschriftung dieser Folie möglich, ohne daß die obere Deckschicht 8 mitbeschriftet wird. Für die empfindliche Folie wird z. B. eine Kunststofffolie verwendet, die unter der Handelsbezeichnung Alkor-Plast CCO-013 geführt wird. Bei diesen Folien liegt der erforderliche Intensitätswert etwa 30 % niedriger als bei der erstgenannten Folie (unter Beibehaltung der Laser- und Beschriftungsparameter).

In dem transparenten Teilbereich 6 der Karte werden die Informationen mittels eines Lasers eingebracht, der hier senkrecht auf die Karte gerichtet wird, wobei die Schicht 8, d. h. die Folie mit dem höheren erforderlichen Intensitätswert, die dem Laser zugewandte Schicht ist. Bei Beschriftung mit einer für beide Folien ausreichend hohen Intensität werden somit in zwei verschiedenen Schichtebenen der Karte die Informationen 10 bzw. 11 eingebracht und zwar in exakt kongruenter Form zueinander. Die Schriftbreite, die im wesentlichen dem Fokusdurchmesser des Lasers im Bereich dieser Schichten entspricht, wird dabei so gewählt, daß sie um einiges, vorzugsweise mindestens um den Faktor 2, kleiner ist als die Gesamtdicke beider Folien. Ein in beide Folien eingebrachter Schriftzug hat daher in Abhängigkeit vom Betrachtungswinkel ein unterschiedliches Erscheinungsbild, da die Schriftzüge in den einzelnen Schichten einmal überlappend und unter einem anderen Betrachtungswinkel einzeln gesehen werden. Beide Informationen sind durch einen transparenten Zwischenbereich voneinander getrennt, der durch den nichtgeschwärzten Bereich in der Schicht 8 gebildet ist. Die Aufzeichnungsparameter und die Dicke dieser Schicht kann dabei so gewählt werden, daß dieser Zwischenbereich möglichst groß ist.

Wird z. B. bei einer Beschriftung im Pulsbetrieb die Pulsfrequenz und die Abtastgeschwindigkeit so gewählt, daß sich die Laserpulse räumlich überlappen, so konzentrieren sich die Materialänderungen in der Nähe der dem Laser zugewandten Oberfläche der Schicht 8.

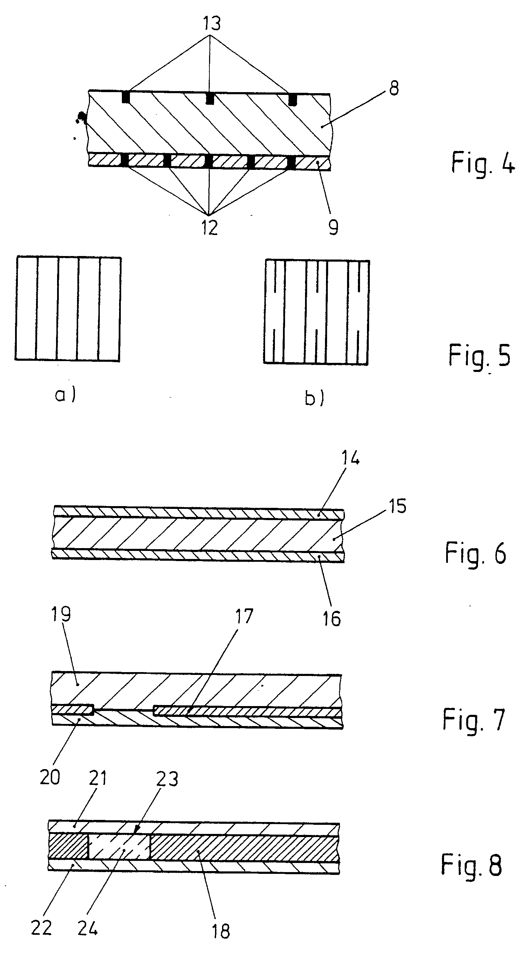

Eine andere Möglichkeit, die Information durch einen transparenten Zwischenraum zu trennen, ist, wie später noch näher anhand der Fig. 6 erläutert, durch einen 3-Schicht-Aufbau gegeben, wobei zwischen zwei laserstrahlempfindlichen Folien eine laserstrahldurchlässige bzw. eine erst bei sehr hohen Intensitäten ansprechende Folie eingebracht wird.

Ein auf diese Weise eingebrachtes Zeichen zeigt bei einer senkrechten Betrachtung bzw. bei Betrachtung in dem Winkel, unter dem die Informationen eingebracht sind, das in der Fig. 3a gezeigte Erscheinungsbild. Unter einem vom Aufzeichnungswinkel abweichenden Betrachtungswinkel verändert sich das Erscheinungsbild (Fig. 3b). Das Zeichen spaltet sich auf und ist in Form von Doppellinien sichtbar. Auf diese Weise können z. B. die Kontonummer oder auch Standardinformationen, wie z. B. ein Logo, ein Emblem etc. eingebracht werden. Kartenindividuelle Daten, z. B. die Kontonummer, oder andere Daten, wie z. B. der Gültigkeitszeitraum, können auch in ein Logo eingearbeitet werden, so daß alle Karten ein gleich erscheinendes Logo aufweisen, das in Teilbereichen aber eine kartenindividualisierende oder zeitbegrenzende Information enthält. Die Karten können damit mit einem einheitlichen Logo ausgestattet werden, das aber z. B. durch die Einarbeitung kartenindividueller Informationen an die bestimmte Karte gebunden ist.

Die Fig. 4 zeigt eine weitere Gestaltungsmöglichkeit der Karte. Hier ist in die empfindlichere Schicht 9 eine gleichförmige Rasterzeichnung eingebracht, z. B. aus mehreren, nebeneinander angeordneten geradlinig oder wellenförmig verlaufenden Linien 12. Bei der Einbringung dieses Linienmusters wird die Intensität selektiv geändert, so daß in der oberen Deckschicht nur ein Teil des Linienrasters 13 vorliegt. In die oberere Schicht können damit durch selektive Unterbrechung des Linienrasters Informationen eingebracht werden, die bei senkrechter Betrachtung nicht erkennbar sind (Fig. 5a), aber bei seitlicher Betrachtung der Karte erscheinen (Fig. 5b), da sich hier das tieferliegende Linienraster nicht mehr mit dem darüberliegenden Raster deckt. Die Anzahl der Linien und ihr Abstand können dabei so gewählt werden, daß sich bei seitlicher Betrachtung die Linienraster in den verschiedenen Schichtebenen ergänzen, so daß eine vollflächige Schwärzung sichtbar ist und die Aussparungen in der oberen Informationsschicht in Form heller Bereiche in dunklem Hintergrund erkennbar werden. Derart eingebrachte Zeichen sind visuell sehr gut erkennbar und gestatten eine einfache Echtheitsprüfung der Karte.

In der Fig. 6 ist ein weiterer möglicher Schichtaufbau der Karte gezeigt. Diese Karte besteht aus drei transparenten Schichten 14, 15 und 16, wobei die Zwischenschicht 15 eine für den Laserstrahl durchlässige bzw. eine bei nur sehr hoher Intensität ansprechende Schicht ist, während die Schichten 14 und 16 ein dem vorgenannten Beispiel entsprechendes Absorptionsverhalten aufweisen. Dieser Schichtaufbau eignet sich in bevorzugtem Maße zur gleichzeitigen oder selektiven Beschriftung der äußeren Kartenschichten unter Beibehaltung eines transparenten Zwischenraums.

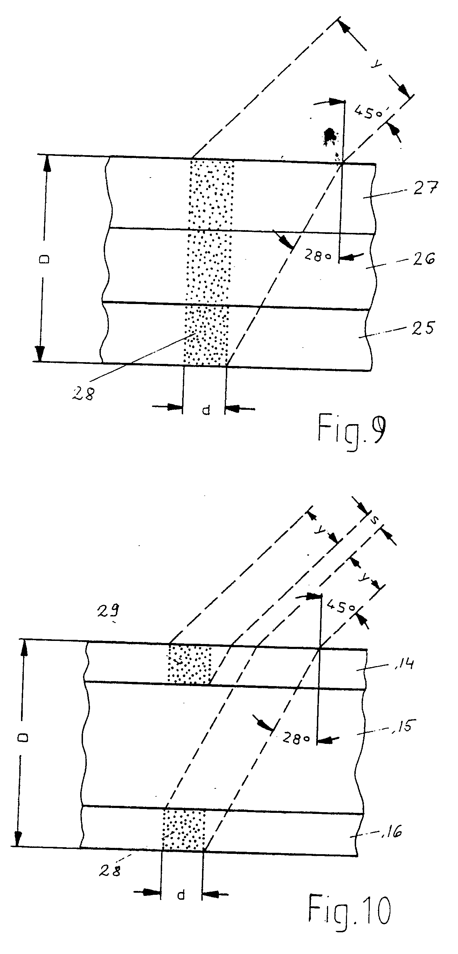

Die Fig. 10 zeigt in einer vergrößerten Darstellung die Gegebenheiten in bezug auf eine Betrachtung unter einem Winkel von 45°. Die äußeren Schichten 14 und 16 haben eine Dicke von 100 $\mu$, während für die Schicht 15 eine Dicke von 300 $\mu$ gewählt wird. Die Informationen 10, 11 werden in die Schichten 14 und 16 eingebracht. Die Informationen 28, 29, die mit einer Schriftbreite d eingebracht sind, sind bei einer Betrachtung unter 45° mit einer scheinbaren Schriftbreite y zu erkennen und durch einen transparenten Zwischenraum s voneinander getrennt.

Vorzugsweise wird, um eine deutliche Trennung der beiden Schriftzüge zu erreichen, die Summe D der Folienstärken unter Beibehaltung des Verhältnisses 1 : 3 : 1 der einzelnen Folienstärken so gewählt, daß der erkennbare transparente Zwischenraum s etwa der halben tatsächlichen Schriftbreite entspricht. Bei einem Brechungsindex der Folien von 1,5 beträgt das dazu notwendige Verhältnis von Schriftbreite d zur Gesamtschichtdicke D 1 : 5.

Die Laserbeschriftung ermöglicht es aber auch, in einfacher Weise die Informationen nicht in senkrechter Einstrahlung einzubringen, sondern auch unter einem zur Kartenoberfläche schrägen Einstrahlwinkel. Damit können Schriftzüge eingebracht werden, die unter "normaler" Betrachtung der Karte z. B. als Doppellinienschrift erkennbar sind, die sich dann aber bei entsprechender Drehung der Karte in eine Einfachschrift umwandelt.

Es ist nicht erforderlich, daß alle Kartenschichten transparente Kunststoffschichten sind. Die Fig. 7 und 8 zeigen z. B. geeignete Ausführungsformen, wobei in den Kartenaufbau opake, aus einem anderen Material oder dem gleichen Material bestehende Schichten eingearbeitet sind. Die in Fig. 7 gezeigte Karte zeigt z. B. einen Kartenaufbau mit einer zwischen transparenten Kartenschichten 19 und 20 eingebetteten dünnen Papierschicht 17, wie sie vorzugsweise bei Ausweiskarten verwendet wird. Diese Papierschicht ist z. B. ein aus der Wertpapierherstellung bekanntes Wertpapier mit Echtheitskennzeichen, wie z. B. Wasserzeichen, Sicherheitsfaden und einem auf der Papieroberfläche befindlichen Sicherheitsdruckbild. In dieser Papierschicht ist ein Fenster vorgesehen. Dieses Fenster wird z. B. durch Ausstanzen der Papierschicht vor Laminierung der Kartenschichten eingebracht. Bei der Laminierung werden die Kartenschichten durch Anwendung von Wärme und Druck miteinander verbunden, wobei der in der Papierschicht befindliche Zwischenraum durch die benachbarten Kunststoffschichten, die bei der Laminierung erweichen, ausgefüllt werden. In dieses Fenster wird anschließend nach dem obengenannten Verfahren das erfindungsgemäße Parallaxenbild eingebracht. Bei der Einbringung des Parallaxenbildes kann dieses so dimensioniert werden, daß es zum Teil über dieses Fenster hinausragt. Außerhalb dieses Fensters bewirkt der Laser eine Schwärzung in dieser Papierschicht. Diese Überlappung des erfindungsmäßen Parallaxenbildes mit der Laserbeschriftung der Papierschicht hat den großen Vorteil, daß dieses Parallaxenbild somit direkt mit dem Wertpapier verbunden wird. Die Übertragung eines Parallaxenbildes, das z. B. nur Standardinformationen enthält, von einer echten Karte auf falsche Karten kann damit auf einfache Weise verhindert werden. Ausweiskarten werden nämlich in der Regel mit einem Hintergrundmuster versehen, das sich aperiodisch von Karte zu Karte ändert. Bei einer Überlappung des Parallaxenbildes mit diesem Hintergrundmuster ist somit ein Ausstanzen und eine Übertragung eines Parallaxenbildes von einer echten Karte auf eine andere Karte nicht möglich, da die Hintergrundmuster nur in den seltensten Fällen in einer zueinander passenden Form vorliegen.

Die Fig. 8 zeigt eine weitere Ausführungsform eines möglichen Schichtaufbaus, wobei in diesem Fall die Kartenkernschicht 18 eine relativ dicke opake Kernschicht sein kann, in die ein Fenster eingebracht ist. Das Fenster in dem opaken Kern ist hier relativ groß, so daß vorzugsweise in dieses Fenster ein transparentes laserstrahldurchlässiges Material eingebaut wird, so daß diese Schicht eine konstante Dicke aufweist. Dieses in das Fenster eingebrachte Material kann z. B. auch eine leicht gefärbte Schicht sein, so daß sich diesbezüglich auch weitere Gestaltungsmöglichkeiten für die Karte ergeben. Diese Kernschicht wird beidseitig mit transparenten Folien 21, 22 überlagert, wobei diese transparenten Folien beide mit einem Laser ab bestimmten Intensitäten veränderbare Folien sind, so daß eine Laserbeschriftung gleichzeitig in beiden Kartenschichten oder eine selektive Beschriftung einzelner Schichten möglich ist.

Es ist, um die erfindungsgemäß bewirkten Effekte deutlich erkennbar zu gestalten, nicht unbedingt erforderlich, daß das sogenannte Parallaxenbild in einem vollständig transparenten Kartenbereich eingebracht wird. Das in der Fig. 7 gezeigte Inlett kann auch vollflächig opak sein. In diesem Fall sind selbstverständlich beide zu beschriftenden, transparenten Folien auf einer Seite des opaken Inletts anzuordnen. Zum Schutz des Inletts wird dieses dann vorzugsweise auf den den genannten Folien gegenüberliegenden Seite mit einer zweiten Schutzschicht abgedeckt.

Eine weitere Ausführungsform zeigt die Fig. 9. Die Karte hat einen 3-Schichtaufbau mit den Schichten 25, 26 und 27, wobei für die mittlere Schicht 26 ein Kunststoff gewählt wird, bei dem der Intensitätswert, um eine Veränderung hervorzurufen, zwischen denen der benachbarten Folien 25 und 27 liegt (Fig. 9). Bei einer Intensität, die über den erforderlichen Intensitätswerten aller drei Folien liegt, zieht sich die mit einem Laser unter senkrechter Einstrahlung eingebrachte Information 28 durch alle drei Schichten hindurch. Eine mit einer Schriftbreite d eingebrachte Information ist bei entsprechender Gesamtdicke D der Schichten unter einem senkrechten Betrachtungswinkel nur als schmaler Schriftzug mit der Breite d erkennbar, während er unter einem Winkel von 45° in verbreiterter Form sichtbar ist. Das Ausmaß der Verbreiterung wird durch die Dicke der Schichten, der Schriftbreite und der Brechungsindices der Materialien bestimmt. Um einen augenfälligen Effekt zu erzielen, werden diese Parameter so gewählt, daß sich bei einer Betrachtung unter 45° die scheinbare Schriftbreite y zumindest verdoppelt. Bei einem Brechungsindex von 1,5 ist daher das Verhältnis von Schriftbreite zur Gesamtdicke der Folien so zu wählen, daß es kleiner 0,3 ist. In dem in der Fig. 9 gezeigten bevorzugten Ausführungsbeispiel ist das Verhältnis von d/D gleich 0,2. Durch entsprechende Wahl der Intensität kann die Beschriftung lokal auch nur auf die Schicht 25 mit dem niedrigsten Schwellenwert bzw. auf die Schichten 25 und 26 begrenzt werden.

Auf diese Weise ist es möglich, die charakteristische Eigenschaft der Laserbeschriftung, nämlich die Beschriftung im Volumen, deutlich visuell erkennbar zu machen, wobei durch die "in die Tiefe gehende" Schrift die Dreidimensionalität der Beschriftung deutlich zum Vorschein kommt.

**Patentansprüche**

1. Ausweiskarte, die mehrere Kunststoffschichten enthält, in die mittels eines Laserstrahls Informationen eingebracht sind, die in Form von Änderungen der optischen Eigenschaften des Kunststoffmaterials aufgrund irreversibler, durch Laserstrahl bewirkter Materialänderungen sichtbar sind, dadurch **gekennzeichnet, daß**

   - mindestens eine erste und eine zweite Schicht transparente Teilbereiche aufweisen, die sich überdecken,
   - die erste Schicht und die zweite Schicht die Eigenschaft besitzen, sich bei Bestrahlung mit dem Laserstrahl sichtbar zu verändern, wobei diese Veränderung erst ab bestimmten Intensitätswerten bewirkt wird und der hierfür jeweils erforderliche Intensitätswert für die erste Schicht niedriger ist als für die zweite Schicht.
   - in die erste Schicht eine erste Information eingebracht ist,
   - in die zweite Schicht eine zweite Information eingebracht ist, die identisch oder eine Teilinformation der ersten Information ist und gleichzeitig mit der ersten Information eingebracht ist, so daß die zweite Information in Aufzeichnungsrichtung im wesentlichen deckungsgleich zur ersten Information vorliegt und daß die Information in der ersten und zweiten Schicht so eingestrahlt sind, daß sie je nach Betrachtungswinkel entweder überdeckend oder einzeln sichtbar sind und sich deren Erscheinungsbild in Abhängigkeit des Betrachtungswinkels dabei verändert.

2. Ausweiskarte nach Anspruch 1, dadurch **gekennzeichnet,** daß die Schriftbreite (d), mit der die Informationen aufgezeichnet sind, kleiner ist als die Summe (D) der Schichtdicken der ersten und zweiten Schicht, gegebenenfalls zusätzlich der Dicke weiterer zwischen diesen Schichten eingelagerten Schichten, wobei die Schriftbreite (d) vorzugsweise um den Faktor zwei kleiner ist als die Summe (D).

3. Ausweiskarte nach Anspruch 1 oder 2, dadurch **gekennzeichnet,** daß die zweite Schicht mit der höheren erforderlichen Bestrahlungsstärkenschwelle an der Kartenoberfläche liegt.

4. Ausweiskarte nach einem oder mehreren der vorhergehenden Ansprüche, dadurch **gekennzeichnet,** daß die Informationen in der zweiten Schicht in die Nähe der Oberfläche dieser Schicht eingebracht ist, die der ersten Schicht gegenüberliegt und damit von der ersten Information durch einen transparenten Zwischenraum räumlich getrennt ist.

5. Ausweiskarte nach Anspruch 1, dadurch **gekennzeichnet,** daß zumindest die erste und die zweite Schicht transparente, vollflächig in die Karte integrierte Folien sind.

6. Ausweiskarte nach Anspruch 1, dadurch **gekennzeichnet,** daß zwischen der ersten und der zweiten Schicht mindestens eine transparente dritte Schicht liegt, deren erforderlicher Intensitätswert, um eine Veränderung hervorzurufen, höher ist, als der in der ersten Schicht.

7. Ausweiskarte nach Anspruch 6, dadurch **gekennzeichnet,** daß der erforderliche Intensitätswert der dritten Schicht höher ist als der der ersten, aber niedriger als der der zweiten Schicht und eine dritte Information enthält, die zumindest Teilinformation der ersten Information ist.

8. Ausweiskarte nach Anspruch 6, dadurch **gekennzeichnet,** daß der erforderliche Intensitätswert der dritten Schicht höher ist als der der ersten und zweiten Schicht.

9. Ausweiskarte nach Anspruch 8, dadurch **gekennzeichnet,** daß die erste und die zweite Information durch die unveränderte, transparente dritte Schicht räumlich voneinander getrennt sind.

10. Ausweiskarte nach einem oder mehreren der vorhergehenden Ansprüche, dadurch **gekennzeichnet,** daß die Ausweiskarte eine oder mehrere zumindest in einem Teilbereich opake Schichten aufweist und daß die erste und die zweite Information von mindestens einer Seite der Karte gleichzeitig sichtbar sind.

11. Ausweiskarte nach Anspruch 4 oder 9, dadurch **gekennzeichnet,** daß die ersten und zweiten Informationen voneinander räumlich getrennt sind und daß die Informationen linienförmige Buchstaben, Ziffern oder Zeichen sind, die unter einem Betrachtungswinkel in Form einer Doppellinienschrift sichtbar sind, während unter einem anderen Betrachtungswinkel diese nur in einer sich überdeckenden Form sichtbar sind.

12. Ausweiskarte nach Anspruch 7, dadurch **gekennzeichnet,** daß die ersten, zweiten und dritten Informationen Punkte, Buchstaben, Ziffern, Zeichen oder Muster sind, die je nach Betrachtungswinkel entweder eine einfache oder eine annähernd doppelte Schriftbreite aufweisen.

13. Ausweiskarte nach einem oder mehreren der vorhergehenden Ansprüche, dadurch **gekennzeichnet,** daß die zweite Information eine echte Teilinformation der ersten Information ist und daß unter mindestens einem Betrachtungswinkel der Unterschied zwischen der ersten und der zweiten Information sichtbar ist.

14. Ausweiskarte nach Anspruch 1, dadurch **gekennzeichnet,** daß die Ausweiskarte eine zusätzliche opake Schicht aufweist, die ein Fenster aufweist und die Informationen in diesen Fensterbereich eingebracht sind.

15. Ausweiskarte nach Anspruch 1, dadurch **gekennzeichnet,** daß diese Informationen kartenindividuelle Daten enthalten.

16. Ausweiskarte nach Anspruch 1, dadurch **gekennzeichnet,** daß die Information ein Logo oder ein Emblem darstellt.

17. Ausweiskarte nach Anspruch 10 oder 14, dadurch **gekennzeichnet,** daß die Informationen übergangslos in die angrenzende opake Schicht übergehen.

18. Verfahren zur Herstellung einer Ausweiskarte, die mehrere Kunststoffschichten enthält, in die mittels eines Laserstrahls Informationen eingebracht sind, die in Form von Änderungen der optischen Eigenschaften des Kunststoffmaterials aufgrund irreversibler, durch Laserstrahl bewirkter Materialänderungen sichtbar sind, dadurch **gekennzeichnet,** daß

- die einzelnen Schichten zu einem Kartenverbund zusammengefügt werden, wobei mindestens eine erste und zweite Kunststoffschicht transparente Teilbereiche aufweisen, die sich überdecken,
- die erste Schicht und die zweite Schicht die Eigenschaft besitzen, sich bei Bestrahlung mit dem Laserstrahl sichtbar zu verändern, wobei diese Veränderung erst ab bestimmten Intensitätswerten bewirkt werden und der hierfür jeweils erforderliche Intensitätswert für die erste Schicht niedriger ist als für die zweite Schicht,
- der Kartenverbund so auf den Laser ausgerichtet wird, daß die zweite Schicht auf der dem Laser zugewandten Seite zu liegen kommt,
- zumindest Teile der Informationen mit einer Intensität eingebracht werden, die ein gleichzeitiges Auftreten sichtbarer Materialänderungen in der ersten und in der zweiten Schicht hervorruft und
- die ersten und zweiten Informationen so eingebracht werden, daß sie je nach Betrachtungswinkel entweder überdeckend oder einzeln sichtbar sind und sich deren Erscheinungsbild in Abhängigkeit des Betrachtungswinkels dabei verändert.

19. Verfahren nach Anspruch 18, dadurch **gekennzeichnet,** daß die Schriftbreite (d), mit der die Informationen aufgezeichnet sind, kleiner ist als die Summe (D) der Schichtdicken der ersten und zweiten Schicht, gegebenenfalls zusätzlich der Dicke weiterer zwischen diesen Schichten eingelagerten Schichten, wobei die Schriftbreite (d) vorzugsweise um den Faktor zwei kleiner ist als die Summe (D).

20. Verfahren nach Anspruch 18, dadurch **gekennzeichnet**, daß ein Teil der Informationen mit einer Intensität eingeschrieben wird, die unter dem erforderlichen Intensitätswert der zweiten Schicht liegt, so daß dieser Informationsanteil nur in die erste Schicht eingebracht wird.

21. Verfahren nach Anspruch 18, dadurch **gekennzeichnet**, daß durch gezielte Verringerung der Intensität die Informationsaufzeichnung in der zweiten Schicht während des Aufzeichnungsvorgangs unterbrochen wird.

22. Verfahren nach Anspruch 18, dadurch **gekennzeichnet**, daß zwischen die erste und zweite transparente Schicht eine dritte Schicht eingebracht wird, die zumindest in den sich überdeckenden, transparenten Teilbereichen der ersten und zweiten Schicht ebenfalls ein transparentes Fenster aufweist.

23. Verfahren nach Anspruch 22, dadurch **gekennzeichnet**, daß für die dritte Schicht ein Kunststoffmaterial gewählt wird, dessen erforderlicher Intensitätswert zur Veränderung des Materials zwischen den erforderlichen Intensitätswerten der ersten und der zweiten Schicht liegt und daß durch entsprechende Wahl der Intensität Veränderungen in allen Schichten hervorgerufen werden oder diese auf die Schichten mit geringeren erforderlichen Intensitätswerten begrenzt werden.

24. Verfahren nach Anspruch 22, dadurch **gekennzeichnet**, daß für die dritte Schicht ein Kunststoffmaterial gewählt wird, dessen erforderlicher Intensitätswert zur Veränderung des Materials über den erforderlichen Intensitätswerten der ersten und der zweiten Schicht liegt und die Intensität so eingestellt wird, daß nur in der ersten und zweiten Schicht optische Veränderungen hervorgerufen werden und die so aufgezeichneten Informationen durch einen transparenten Zwischenraum räumlich voneinander getrennt sind.

25. Verfahren nach Anspruch 18, dadurch **gekennzeichnet**, daß die Aufzeichnung im Pulsscanverfahren erfolgt.

26. Verfahren nach Anspruch 25, dadurch **gekennzeichnet**, daß die Pulsfrequenz und die Abtastgeschwindigkeit so gewählt werden, daß sich aufeinanderfolgende Pulse überlappen.

27. Verfahren nach Anspruch 19, dadurch **gekennzeichnet**, daß die Schärfentiefe des fokussierten Laserstrahls wesentlich größer ist als der Abstand zwischen der ersten und der zweiten Schicht und daß der Kartenverbund innerhalb der Schärfentiefe in der Fokusebene des Laserstrahls liegt.

**Claims**

1. An identity card containing a plurality of synthetic layers in which information is incorporated by means of a laser beam, said information being visible in the form of changes in the optical properties of the synthetic material due to irreversible changes in the material caused by the laser beam, **characterized** in that

   - at least a first and a second layer have transparent areas which overlap,
   - the first layer and the second layer have the property of changing visibly when exposed to the laser beam, this change being caused only as of certain intensity values and the particular intensity value required herefor being lower for the first layer than for the second layer,
   - a first piece of information is incorporated in the first layer,
   - a second piece of information is incorporated in the second layer, which is identical or is part of the first piece of information and is incorporated simultaneously with the first piece of information so that the second piece of information is present substantially congruent to the first piece of information in the recording direction, and the information in the first and second layers is provided by the beam in such a way as to be visible either overlapping or singly depending on the viewing angle, its appearance varying in accordance with the viewing angle.

2. The identity card of claim 1, **characterized** in that the writing width ($d$) with which the information is recorded is smaller than the sum ($D$) of the layer thicknesses of the first and second layers, plus the thickness of further layers, if any, embedded between these layers, the writing width ($d$) preferably being smaller than the sum ($D$) by a factor of two.

3. The identity card of claim 1 or 2, **characterized** in that the second layer with the higher necessary radiant-flux density threshold is located on the card surface.

4. The identity card of one or more of the above claims, **characterized** in that the information in the second layer is incorporated in the vicinity of the surface of this layer which is opposite the first layer and is thus spatially separated from the first piece of information by a transparent space.

5. The identity card of claim 1, **characterized** in that at least the first and the second layers are transparent films integrated over the entire surface into the card.

6. The identity card of claim 1, **characterized** in that at least a transparent third layer is located between the first and the second layers, whose necessary intensity value for causing a change is higher than that in the first layer.

7. The identity card of claim 6, **characterized** in that the necessary intensity value of the third layer is higher than that of the first layer, but lower than that of the second layer and contains a third piece of information which is at least part of the first piece of information.

8. The identity card of claim 6, **characterized** in that the necessary intensity value of the third layer is higher than that of the first and second layers.

9. The identity card of claim 8, **characterized** in that the first and second pieces of information are spatially separated from each other by the unchanged transparent third layer.

10. The identity card of one or more of the above claims, **characterized** in that the identity card has one or more layers which are opaque at least in one area, and the first and second pieces of information are visible simultaneously from at least one side of the card.

11. The identity card of claim 4 or 9, **characterized** in that the first and second pieces of information are spatially separated from each other, and the pieces of information are linear letters, numbers or symbols which are visible in the form of double line writing at one viewing angle while they are only visible in an overlapping form at a different viewing angle.

12. The identity card of claim 7, **characterized** in that the first, second and third pieces of information are dots, letters, numbers, symbols or patterns which have either a simple or an approximately double writing width depending on the viewing angle.

13. The identity card of one or more of the above claims, **characterized** in that the second piece of information is a genuine part of the first piece of information, and the difference between the first and second pieces of information is visible at at least one viewing angle.

14. The identity card of claim 1, **characterized** in that the identity card has an additional opaque layer which has a window and the information is incorporated in this window area.

15. The identity card of claim 1, **characterized** in that these pieces of information contain card-individual data.

16. The identity card of claim 1, **characterized** in that the information is a logo or an emblem.

17. The identity card of claim 10 or 14, **characterized** in that the pieces of information run smoothly into the adjacent opaque layer.

18. A method of manufacturing an identity card containing a plurality of synthetic layers in which information is incorporated by means of a laser beam, said information being visible in the form of changes in the optical properties of the synthetic material due to irreversible changes in the material caused by the laser beam, **characterized** in that

- the individual layers are joined together to form a card compound, at least a first and a second synthetic layer having transparent areas which overlap,
- the first layer and the second layer have the property of changing visibly when exposed to the laser beam, this change being effected only as of certain intensity values and the particular intensity value required herefor being lower for the first layer than for the second layer,
- the card compound is oriented toward the laser in such a way that the second layer comes to lie on the side facing the laser,
- at least parts of the information are incorporated with an intensity which causes visible changes of material to occur simultaneously in the first and second layers, and
- the first and second pieces of information are incorporated in such a way as to be visible either overlapping or singly depending on the viewing angle, their appearance changing in accordance with the viewing angle.

19. The method of claim 18, **characterized** in that the writing width (*d*) with which the information is recorded is smaller than the sum (*D*) of the layer thicknesses of the first and second layers plus the thickness of further layers, if any, embedded between these layers, the writing width (*d*) preferably being smaller than the sum (*D*) by a factor of two.

20. The method of claim 18, **characterized** in that part of the information is inscribed with an intensity lower than the necessary intensity value of the second layer, so that this part of the information is only incorporated in the first layer.

21. The method of claim 18, **characterized** in that the recording of information in the second layer is interrupted during the recording process by selective reduction of the intensity.

22. The method of claim 18, **characterized** in that a third layer is incorporated between the first and second transparent layers, said third layer also having a transparent window at least in the overlapping transparent areas of the first and second layers.

23. The method of claim 22, **characterized** in that a synthetic material is selected for the third layer whose necessary intensity value for changing the material is between the necessary intensity values of the first and second layers, and changes are effected in all layers by appropriate selection of the intensity or they are limited to the layers with lower necessary intensity values.

24. The method of claim 22, **characterized** in that a synthetic material is selected for the third layer whose necessary intensity value for changing the material is higher than the necessary intensity values of the first and second layers and the intensity is set such that optical changes are effected only in the first and second layers and the pieces of information recorded in this way are spatially separated from each other by a transparent space.

25. The method of claim 18, **characterized** in that the recording is performed by the pulse scanning method.

26. The method of claim 25, **characterized** in that the pulse frequency and the scanning speed are selected in such a way that successive pulses overlap.

27. The method of claim 19, **characterized** in that the depth of focus of the focused laser beam is considerably greater than the distance between the first and second layers, and the card compound is located within the depth of focus on the plane of focus of the laser beam.

**Revendications**

1. Carte d'identité pourvue de plusieurs couches en matière synthétique, dans lesquelles des informations sont inscrites par un rayon laser et lisibles sous forme de variations des propriétés optiques du matériau synthétique, sur la base de variations irréversibles du matériau provoquées par le rayon laser, caractérisée en ce qu'
   - au moins une première et une deuxième couche présentent des zones partielles transparentes qui se recouvrent en coïncidence,
   - la première couche et la deuxième couche présentent la propriété de se modifier de façon visible lors d'un éclairage au rayon laser, cette variation étant ensuite provoquée à partir de valeurs d'intensité déterminées et la valeur d'intensité chaque fois nécessaire pour la première couche étant inférieure à celle nécessaire pour la deuxième couche,
   - dans la première couche une première information est introduite,
   - dans la deuxième couche une deuxième information est introduite, identique à la première information, ou qui est une information partielle de la première information et qui est introduite simultanément à la première information, de sorte que la deuxième information se présente, dans le sens de l'enregistrement, pratiquement en coïncidence avec la première information, et que l'information est émise par rayonnement dans la première et la deuxième couche, de telle façon que, selon l'angle d'observation, elles soient visibles soit en coïncidence soit individuellement, et que son image apparente varie en fonction de l'angle d'observation.

2. Carte d'identité selon la revendication 1, caractérisée en ce que la largeur d'écriture (d) selon laquelle les informations sont enregistrées, est inférieure à la somme (D) des épaisseurs de couche des première et deuxième couches, le cas échéant, en plus, de l'épaisseur d'autres couches intercalées entre ces couches, la largeur d'écriture (d) étant de préférence inférieure, dans le facteur deux, à la somme (D).

3. Carte d'identité selon la revendication 1 ou 2, caractérisée en ce que la deuxième couche, qui présente un seuil d'intensité d'éclairage nécessaire plus élevé, est placée sur la surface de la carte.

4. Carte d'identité selon une ou plusieurs des revendications précédentes, caractérisée en ce que les informations sont inscrites dans la deuxième couche à proximité de la surface de cette couche, qui est placée à l'opposé de la première couche et ainsi séparée spatialement de la première information par un espace intermédiaire transparent.

5. Carte d'identité selon la revendication 1, caractérisée en ce qu'au moins la première et la deuxième couches intégrées sur toute leur surface dans la carte sont transparentes.

6. Carte d'identité selon la revendication 1, caractérisée en ce qu'entre la première et la deuxième couche se trouve au moins une troisième couche transparente, dont la valeur d'intensité nécessaire pour provoquer une variation est supérieure à celle nécessaire dans la première couche.

7. Carte d'identité selon la revendication 6, caractérisée en ce que la valeur d'intensité nécessaire pour la troisième couche est supérieure à celle de la première couche, mais inférieure à celle de la deuxième couche, et contient une troisième information, qui est au moins une information partielle de la première information.

8. Carte d'identité selon la revendication 1 ou 2, caractérisée en ce que la valeur d'intensité nécessaire pour la troisième couche est supérieure à celle des première et deuxième couches.

9. Carte d'identité selon la revendication 8, caractérisée en ce que les première et deuxième informations sont séparées spatialement l'une de l'autre au moyen d'une troisième couche transparente, inchangée.

10. Carte d'identité selon une ou plusieurs des revendications précédentes, caractérisée en ce que la carte d'identité présente une ou plusieurs couches opaques dans une zone partielle et que les première et deuxième informations sont visibles simultanément depuis au moins un côté de la carte.

11. Carte d'identité selon la revendication 4 ou 9, caractérisée en ce que les premières et deuxièmes informations sont séparées spatialement les une des autres et que les informations sont des lettres, chiffres ou signes linéaires, visibles sous un angle d'observation, sous forme d'une inscription à double ligne, tandis que, sous un autre angle d'observation, elles ne sont visibles que sous une forme qui coïncide.

12. Carte d'identité selon la revendication 7, caractérisée en ce que les premières, deuxièmes et troisièmes informations sont des points, lettres, chiffres, signes ou motifs, qui présentent selon l'angle d'observation, soit une largeur d'écriture simple ou à peu près double.

13. Carte d'identité selon une ou plusieurs des revendications précédentes, caractérisée en ce que la deuxième information est une vraie information partielle de la première information et que, sous au moins un angle d'observation, la différence entre la première et la deuxième information est visible.

14. Carte d'identité selon la revendication 1, caractérisée en ce que la carter d'identité présente une couche opaque supplémentaire, qui présente une fenêtre et les informations sont inscrites dans cette zone de fenêtre.

15. Carte d'identité selon la revendication 1, caractérisée en ce que ces informations contiennent des données de carte individuelles.

16. Carte d'identité selon la revendication 1, caractérisée en ce que l'information est un logo ou un emblème.

17. Carte d'identité selon la revendication 10 ou 14, caractérisée en ce que les informations se transforment en couche opaque limitrophe sans transition.

18. Procédé de fabrication d'une carte d'identité pourvue de plusieurs couches en matière synthétique, dans lesquelles des informations sont inscrites par un rayon laser et lisibles sous forme de variations des propriétés optiques du matériau synthétique, sur la base de variations irréversibles du matériau provoquées par le rayon laser, caractérisé en ce que:
- les différentes couches sont assemblées pour former une carte composite, au moins une première et une deuxième couche en matière synthétique présentant des zones partielles transparentes qui se recouvrent en coïncidence,

- la première couche et la deuxième couche ont la propriété de se modifier de façon visible lors d'un éclairage au rayon laser, cette modification étant provoquée ensuite, à partir de valeurs d'intensité déterminées, et la valeur d'intensité chaque fois nécessaire pour la première couche étant inférieure à celle de la deuxième couche,

- la carte composite est orientée par rapport au laser de façon que la deuxième couche vienne appuyer sur la face tournée vers le laser,

- au moins des parties des informations sont inscrites avec une intensité, qui provoque la survenance simultanée de variations visibles du matériau, dans la première et la deuxième couche, et

- les premières et deuxièmes informations étant inscrites de telle façon que, selon l'angle d'observation, elles sont visibles soit en recouvrement en coïncidence, soit individuellement, et leur image apparente variant alors en fonction de l'angle d'observation.

19. Procédé selon la revendication 18, caractérisé en ce que la largeur d'écriture (d), selon laquelle les informations sont inscrites, est inférieure à la somme (D) des épaisseurs de couche des première et deuxième couches, le cas échéant, en plus, de l'épaisseur d'autres couches intercalées entre ces couches, la largeur d'écriture (d) étant de préférence inférieure, dans le facteur deux, à la somme (D).

20. Procédé selon la revendication 18, caractérisé en ce qu'une partie des informations est inscrite avec une intensité inférieure à la valeur d'intensité nécessaire pour la deuxième couche, de sorte que cette partie d'information n'est inscrite que dans la première couche.

21. Procédé selon la revendication 18, caractérisé en ce que grâce à une limitation, opérée à dessein, de l'intensité, l'enregistrement dans la deuxième couche est interrompu pendant le processus d'enregistrement.

22. Procédé selon la revendication 18, caractérisé en ce qu'entre la première et la deuxième couche est insérée une troisième couche, qui présente également une fenêtre transparente, au moins dans les zones partielles transparentes, qui se recouvrent, de la première et de la deuxième couche.

23. Procédé selon la revendication 22, caractérisé en ce qu'on choisit pour la troisième couche un matériau synthétique dont la valeur d'intensité nécessaire pour obtenir la variation du matériau se situe entre les valeurs d'intensité nécessaires de la première et de la deuxième couche, et que, par un choix correspondant de l'intensité, on provoque des variations dans toutes les couches, ou que ces variations sont limitées aux couches qui présentent des valeurs d'intensité nécessaires faibles.

24. Procédé selon la revendication 22, caractérisé en ce qu'on choisit pour la troisième couche un matériau synthétique dont la valeur d'intensité nécessaire pour obtenir la variation du matériau se situe entre les valeurs d'intensité nécessaires de la première et de la deuxième couche, et l'intensité étant réglée de telle façon que seules sont provoquées des variations optiques dans la première et la deuxième couche et que les informations ainsi enregistrées sont séparées spatialement les unes des autres par un espace intermédiaire transparent.

25. Procédé selon la revendication 18, caractérisé en ce que l'enregistrement s'effectue suivant un procédé par impulsion.

26. Procédé selon la revendication 25, caractérisé en ce que la fréquence de pulsation et la vitesse de balayage sont choisies de façon que des impulsions successives se chevauchent.

27. Procédé selon la revendication 19, caractérisé en ce que la profondeur de morsure du rayon laser focalisé est supérieure à la distance entre la première et la deuxième couche, et en ce que la carte composite est placée dans les limites de la profondeur de morsure, dans le plan focal du rayon laser.

Fig. 1

Fig. 2

a)          b)          Fig. 3

Fig. 4

Fig. 5

a )     b )

Fig. 6

Fig. 7

Fig. 8

Fig.9

Fig.10